# EUROPÄISCHE PATENTSCHRIFT

(11) **EP 2 769 609 B1**
(45) Veröffentlichungstag und Bekanntmachung des Hinweises auf die Patenterteilung: **25.01.2017**
(21) Anmeldenummer: 14401025.3
(22) Anmeldetag: 19.02.2014
(51) Int. Cl.: A01B 59/06

(54) **AUS EINEM SCHLEPPER UND EINER ANHÄNGBAREN GEZOGENEN LANDMASCHINE BESTEHNDE LANDWIRTSCHAFTLICHE KOMBINATION**
COMBINATION OF A TRACTOR AND AN AGRICULTURAL MACHINE ATTACHED AND PULLED BY THE TRACTOR
ENSEMBLE TRACTEUR ET MACHINE AGRICOLE TRACTÉE ATTACHÉE AU TRACTEUR

(30) Priorität: 22.02.2013 DE 102013101762
(43) Veröffentlichungstag der Anmeldung: 27.08.2014
(73) Patentinhaber: Amazonen-Werke H. Dreyer GmbH & Co. KG, 49205 Hasbergen (DE)
(72) Erfinder: Havemeyer, Frank, 27711 Osterholz-Scharmbeck (DE); Mertens, Daniel, 26135 Oldenburg (DE)

(56) Entgegenhaltungen:
- EP-A1- 2 000 016
- EP-A2- 0 632 953
- DE-A1- 19 826 295
- DE-A1-102008 032 592

## Beschreibung

Die Erfindung betrifft eine aus einem Schlepper und einer an einem Schlepper ankuppelbare Landmaschine bestehende landwirtschaftliche Kombination gemäß dem Oberbegriff des Patentanspruches 1.

Anhängbare, gezogene Landmaschinen insbesondere Sämaschinen, mit einem über den Boden abrollenden Fahrwerk und eine über ein Kopplungselement mit einer Zugmaschine verbundene Zugdeichsel, die beide an einem Zentralrahmen der Sämaschine angeordnet sind, sind in der Praxis bekannt geworden. Auf der Rückseite des Zentralrahmens ist ein Heckrahmen mit Dünge- und Säscharen angeordnet. Dieser im hinteren Fahrwerksbereich des Rahmens angeordnete Heckrahmen ist über Gelenke am Rahmen angelenkt und mit Hydraulikzylindern in eine nach oben ausgerichtete, vertikale Transportposition anzuheben und kann in Zugrichtung parallel zum Zentralrahmen eingeklappt werden. Auf dem vorderen Teil des Zentralrahmens vor dem Fahrwerk ist zumindest ein zu verteilendes Material aufnehmender Vorratsbehälter angeordnet.

Wird der Heckrahmen mit den Dünge- und Säscharen beispielsweise bei Wendemanövern von dem Boden abgehoben, ändert sich die Belastung der vor und hinter dem Fahrwerk liegenden Rahmenbereiche. Der hintere Bereich wird stärker belastet, so dass das jetzt wirksame Heckgewicht ein Drehmoment erzeugt, welches die Zugdeichsel entlastet. Bei unzureichendem Material im Vorratsbehälter kann es zum Hochschlagen der Zugtraverse des Trailers kommen. Dies ist nur durch ein ausreichendes Kontergewicht zu vermeiden. Die am Unterlenker des Schleppers bauseitig meist einfachwirkende als ausgebildete Hubzylinder können die auftretende Hebelwirkung nicht kompensieren. Somit kann die an den Unterlenkern angekuppelte Zugtraverse des angehängten Trailers nach oben schlagen.

Das unzureichende Gegengewicht ergibt sich, wenn der vor der Trailerachse angeordnete Vorratsbehälter nicht genügend gefüllt ist, um zumindest ein Gleichgewicht von Front- und Heckbelastung aufrecht zu halten. Um eine ausreichende Belastung des vorderen Bereiches sicher zu stellen, werden zusätzliche Kontergewichte vor der Trailerachse an dem Rahmen oder der Zugdeichsel angeordnet und/oder die Hebellänge durch Versetzen der Trailerachse verkürzt, um der negativen Stützlast der Zugtraverse entgegenzuwirken.

Diese zusätzliche Ballastierung ist nachteilig, die zum einen ein höherer Kraftstoffverbrauch der Zugmaschine verursacht und zum anderen erzeugt die höhere Trailerlast eine unnötige Verdichtung des zu bearbeitenden Bodens.

Auf dem Rahmen vor den Laufrädern ist zumindest ein das auszubringende Material, insbesondere Dünger in größerer Menge aufnehmender Vorratsbehälter angeordnet. Durch das sich in dem Vorratsbehälter befindliche Material ergibt sich eine erhöhte Stützlast auf das Kupplungselement. Während des Ausbringens von Material verringert sich die Materialmenge im Vorratsbehälter und somit auch die in Richtung des Bodens auf das Kupplungselement wirkende Stützlast. Hierdurch besteht dann, wenn sich zu wenig Material im Vorratsbehälter befindet, die vorbeschriebene Problematik. Weiterhin wäre es wünschenswert, wenn die Stützlast auf das Kupplungselement durch die Entnahme von Material aus dem Vorratsbehälter nicht übermäßig stark variiert.

Die EP 2 000 016 A1 zeigt eine gezogene landwirtschaftliche Maschine welche über ein Kuppelelement an die Unterlenker der Dreipunktkupplungselemente eines Ackerschleppers anzukuppeln ist.

Die EP 0 632 953 A2 zeigt eine als Anbaugerät ausgebildete Landmaschine, die über einen Anbaubock an sämtliche Lenker der Dreipunktkupplungselemente eines Ackerschleppers angeschlossen ist. Hier erfolgt durch entsprechende Kraftübertragungshebel eine Übertragung von Gewicht des Schleppers auf die Landmaschine. Diese Gewichtsübertragung bei einem Anbaugerät mit an sämtlichen Lenkern der Dreipunktkupplungselemente des Ackerschleppers angeschlossenen Landmaschine ist zumindest im Hinblick des Ankuppelns sehr aufwändig.

Der Erfindung liegt die Aufgabe zugrunde, in einfacher Weise in verbesserter Weise an der gezogenen Landmaschine immer eine positive Stützlast an der Zugdeichsel in gleichmäßigerer und in nicht stark sich verändernder Weise sicherzustellen.

Diese Aufgabe wird in erfindungsgemäßer Weise durch die kennzeichnenden Merkmale des Anspruches 1 gelöst.

Infolge dieser Maßnahmen lässt sich entsprechend der von dem Sensor ermittelten Daten der von dem Schlepper auf das Kupplungselement des Anbaugerätes übertragende Gewichtsanteil entsprechend der aus dem Vorratsbehälter entnommenen Menge anpassen. Somit wird die Gewichtsübertragung von der sich im Vorratsbehälter befindlichen Materialmenge entsprechend angepasst. Dies hat den Vorteil, dass von dem Schlepper bei vollem Vorratstank nicht unnötig viel Gewicht von der Hinterachse des Schleppers entnommen wird. Somit bleibt immer eine ausreichende Traktion des Ackerschleppers sichergestellt. Eine ausreichende und hohe Traktion wird bei vollständig gefülltem Vorratstank eher gebraucht als bei bereits teilweise entleertem Vorratsbehälter. Außerdem kommt hinzu, dass die Stützlast bei gefülltem Vorratsbehälter bereits maximal ist und eine Gewichtsübertragung vom Schlepper auf die Kopplungselemente des angehängten Gerätes nicht vollkommen ausgereizt werden muss. Durch den Sensor, der die Materialmenge in dem Vorratsbehälter ermittelt, wird die Kraftübertragungseinrichtung entsprechend angesteuert.

In einfacher Weise wird die Materialmenge in dem Vorratsbehälter erfasst, um damit entsprechend der in dem Vorratsbehälter enthaltenen Materialmenge die Gewichtsübertragung durch die Kraftübertragungseinrichtung entsprechend anpassen zu können.

So kann ohne zusätzliche Anbringung von Ballastierungen an der gezogenen Landmaschine immer eine positive Stützlast an der Zugdeichsel sichergestellt werden.

In einfacher Weise lässt sich die in dem Vorratsbehälter enthaltene Materialmenge dadurch ermitteln, dass die Sensoreinrichtung zur Ermittlung des in dem zumindest einen Vorratsbehälter befindliche Materialmenge als Wiegesensor ausgebildet ist.

Hierbei wird der Zugdeichsel oder den der Zugdeichsel zugeordneten Kupplungselementen mittels Gelenkanordnungen eine jeweils mit den Unterlenkern des Schleppers zusammenwirkende Kraftübertragungseinrichtung angeordnet, die vorzugsweise einen verschwenkbar angeordneten Kraftübertragungshebel aufweist, der das sich im Bereich des jeweiligen Unterlenkers befindliche Ende des jeweiligen Kraftübertragungshebels jeweils mittels eines Hydraulikzylinders gegen die Unterseite des jeweiligen Unterlenkers derart drückt, dass Gewichtskraft vom Schlepper auf das vordere Ende der Zugdeichsel und/oder die zugeordneten Kopplungselemente übertragen wird. Es erfolgt ein entsprechende Kraftverspannung durch die Kraftübertragungshebel zwischen Zugdeichsel und Unterlenker des Schleppers.

Eine vorteilhafte Ausführung ergibt sich dadurch, dass der jeweilige Hydraulikzylinder zwischen dem mit dem Unterlenker zusammenwirkenden Ende abgewandten Endbereich des Kraftübertragungshebels und dem vorderen Ende der Zugdeichsel und/oder der an der Zugdeichsel angeordneten Kupplungselement angeordnet ist.

Eine Anpassung an verschiedene bauliche Ausführungen von Schlepperunterlenkern wird dadurch ermöglicht, dass zumindest einer der Hebelarme, vorzugsweise der mit der Unterseite des Unterlenkers zusammenwirkende Hebelarm des jeweiligen Kraftübertragungshebels aus zwei in verschiedenen Stellungen zueinander einstellbaren Teilarmen besteht.

Um eine einfache Ausgestaltung der Kraftübertragung zu verwirklichen, ist vorgesehen, dass an dem Zugtraverse zur Anordnung der beiden Kraftübertragungshebel und des zwischen dem jeweiligen Kraftübertragungshebel und der Zugdeichsel und Kupplungselementen angeordneten Hydraulikzylinders ein zweiarmiger Traghebel drehfest angeordnet ist.

Des Weiteren lässt sich die Gewichtskraft vom Ackerschlepper in einfacher Weise dadurch übertragen, dass die Aushubeinrichtung für die hinter den Laufrädern angeordneten Bodenbearbeitungswerkzeuge und/oder Säaggregate zumindest einen Hydraulikzylinder aufweist, dass der zumindest eine Hydraulikzylinder der Kraftübertragungseinrichtung über eine hydraulische Betätigungseinrichtung derart mit Druck beaufschlagbar sind, dass Schleppergewichtskraft auf das vordere Ende der Zugdeichsel und/oder die zugeordneten Kupplungselemente zumindest dann übertragen wird, wenn die die hinter den Laufrädern angeordneten Bodenbearbeitungswerkzeuge und/oder Säaggregate über die Aushubeinrichtung angehoben werden und/oder angehoben sind.

Um eine schnelle und präzise Bewegung der Krafthebel zu ermöglich, sind die Hydraulikzylinder der Kraftübertragungseinrichtung als doppelwirkende Hydraulikzylinder ausgebildet.

Damit die Zugtraverse beim Ausheben des Heckrahmens nicht in eine höhere Position gelangt, ist vorgesehen, dass die Hydraulikzylinder der Kraftübertragungseinrichtung zum Übertragen von Schleppergewichtskraft auf das vordere Ende der Zugdeichsel und/oder die zugeordneten Kupplungselemente unmittelbar vor oder beim Einleiten des Aushebens der Bodenbearbeitungswerkzeuge und/oder Säaggregate über die Aushubeinrichtung mit Druck beaufschlagt werden.

Weitere Einzelheiten der Erfindung sind den Unteransprüchen, Beispielbeschreibung und den Zeichnungen zu entnehmen. Hierbei zeigen:
- Fig.1: die gezogene Sämaschine in perspektivischer Darstellung,
- Fig.2: das erfindungsgemäße Kraftübertragungselement zwischen Schlepper und gezogener Sämaschine in perspektivischer Darstellung und vergrößertem Maßstab,
- Fig.3: das Kraftübertragungselement zwischen Schlepper und gezogener Sämaschine in perspektivischer Darstellung und vergrößertem Maßstab,
- Fig.4: das Kraftübertragungselement in einer anderen perspektivischen Darstellung,
- Fig.5: einen Hydraulikschaltplan,
- Fig.6: einen weiteren Hydraulikschaltplan,
- Fig.7: einen weiteren Hydraulikschaltplan,
- Fig.8: einen weiteren Hydraulikschaltplan,
- Fig.9: einen weiteren Hydraulikschaltplan,
- Fig.10: einen weiteren Hydraulikschaltplan und
- Fig.11: einen weiteren Hydraulikschaltplan.

Die gezogene landwirtschaftliche Sämaschine weist einen Zentralrahmen 1 auf, der sich über auf den Boden abrollendes Fahrwerk in Form von Laufrädern 2 und einer Zugdeichsel 3 über die Koppelvorrichtung eines die Sämaschine ziehenden Schleppers abstützt. Die Laufräder 2 und die Zugdeichsel 3 sind an dem Zentralrahmen 1 angeordnet. Ein Heckrahmen 4 mit Dünge- 5 und Säscharen 6 ist mit dem Zentralrahmen 1 im hinteren Fahrwerksbereich verbunden und kann über ein Gelenk mit Hydraulikzylindern im rechten Winkel in eine nach oben ausgerichtete, vertikale Transportposition verfahren und in Zugrichtung parallel zum Zentralrahmen 1 eingeklappt werden.

Aus einem Vorratsbehälter 7, der im vorderen Bereich des Zentralrahmens 1 angeordnet ist, gelangt ein zu verteilendes Material über eine Dosiereinrichtung 8 in ein Hauptrohr 9, das mit einem Gebläse zu dem am Heckrahmen 4 ausgebildeten Verteilerkopf 10 transportiert wird. Aus dem Verteilerkopf 10 gelangt das Material über mehrere Schläuche zu den einzelnen Düngescharen 5 am Heckrahmen 4 in den zu bearbeitenden Boden. Zusätzlich ist auf dem Heckrahmen 4 zentral ein Saatguttank 11 mit einer Saatgutvereinzelung angeordnet, die das Saatgut mit einem Gebläse über Saatgutschläuche an die einzelnen Säschare 6 befördert und ebenfalls in den Boden einbringt.

Am vorderen Ende des Zentralrahmens 1 ist die Zugdeichsel 3 angeordnet. Der vordere Bereich der Zugdeichsel 3 ist als Kupplungskopf 12 ausgebildet, welcher sich über einen Bolzen 13 um seine aufrechte Achse verschwenken lässt. Im vorderen Bereich ist eine Zugtraverse 14 verschwenkbar durch einen in Fahrtrichtung 15 weisenden Bolzen angeordnet und lässt eine geringfügige, gegenläufige Verdrehbewegung zwischen Zugmaschine und angehängter Sämaschine um die Fahrtrichtung 15 weisende Achse 16 zu. Die Zugtraverse 14 weist an ihren beiden Enden bolzenartige Kupplungselemente 17 auf, die mit dem Kupplungselement 18 des Unterlenkers 19 des Dreipunktkrafthebers 20 des Schleppers verbunden sind. Auf den beiden Enden 18 der Zugtraverse 14 sind kugelförmige Buchsen 21 angeordnet, welche in den Kupplungselementen 18 der Unterlenkereinheit 19 des Schleppers aufgenommen werden.

Auf der Zugtraverse 14 sind auf jeder Seite zweiarmige Traghebel 22 drehfest befestigt, die durch eine Befestigungsvorrichtung 23, insbesondere Klemmvorrichtung auf der Zugtraverse 14 variabel verschoben und feststellbar sind. Unterhalb der Zugtraverse 14 ist an dem des zweiarmigen Traghebels 22 mittels eines Gelenkbolzens 24 der zweiarmige Kraftübertragungshebel 25 verschwenkbar gelagert. Zwischen das dem Schlepper und dem Kraftüberragungshebel 25 abgewandte Ende des Traghebels 22 und das dem Unterlenker abgewandte Ende des Kraftübertragungshebels 25 ist der doppelwirkende Hydraulikzylinder 26 angeordnet. Der doppelwirkende Hydraulikzylinder 26 kann so den Kraftübertragungshebel 25 verschwenken. An der dem Schlepper zugewandten Seite des Kraftübertragungshebels 25 ist außermittig ein Teilarmende 27 verschwenkbar mit dem Kraftübertragungshebel 25 verbunden. Das andere Ende des Teilarms 27 weist eine Bohrung auf, durch die ein Verbindungsbolzen 28 geführt und mit der gegenüberliegenden Kraftübertragungsvorrichtung verbunden ist. An den Enden des Verbindungsbolzens 28 sind zwei zylinderförmige Kunststoffbuchsen 29 angeordnet, welche durch eine Schraubverbindung 30 mit einer runden Scheibe 31 fixiert sind. Durch eine Anordnung von mehreren Bohrungen im mittleren Bereich des Teilarms 27 lässt sich dieser über verschieden, angeordneten Bohrungen an dem Schlepper zugewandten Ende des Kraftübertragungshebels 25 mit einem Bolzen an unterschiedliche Unterlenkergrößen des Schleppers anpassen.

Die Hydraulikzylinder 26 sind über Hydraulikleitungen, wie noch nachfolgend beschrieben wird, mit der Traktorhydraulikanlage 32 verbunden und werden durch ein Steuersignal mit Druck beaufschlagt und verfahren in eine vorgegebene Endposition. Bevor der Heckrahmen 4 angehoben wird, werden die Hydraulikzylinder 26 ausgefahren, so dass sich die Kraftübertragungshebel 25 verschwenken und dadurch mit den an den Teilarmen 27 angeordneten Kunststoffbuchsen 29 gegen die Unterseite des Schlepperunterlenkers 19 drücken. Hierdurch wird Gewicht und/oder Kraft, die in Richtung des Bodens wirkt, auf die Zugdeichsel 3 übertragen. Dieser Effekt vermeidet, dass die Zugdeichsel 3 durch das Anheben des Heckrahmens 4 hochschlagen kann. Bei ausreichender Befüllung des Düngervorratsbehälters 7 ist die Ballastierung im vorderen Bereich des Zentralrahmens 1 und der Zugdeichsel 3, auch ohne Kraft- und Gewichtsbelastung vom Ackerschlepper ausreichend, so dass die Zugdeichsel 3 nicht hochschlagen kann.

Der Vorratsbehälter 7 ist mittels der beiden hinteren jeweils einem Gelenkbolzen 60 aufweisenden Gelenklager 61 und dem einen vorderen Gelenkbolzen aufweisenden Gelenklager 62 auf dem Tragrahmen 1 der Maschine befestigt. Dem vorderen Gelenkbolzen des Gelenklagers 62 ist ein Wiegesensor 63 zur Aufnahme des Gewichtes des sich im Vorratsbehälter 7 befindlichen Materiales angeordnet. Da der Vorratsbehälter 7 über die beiden hinteren Gelenklager 61 beweglich gegenüber dem Tragrahmen 1 angeordnet ist, liefert der Wiegesensor 63 einen Referenzwert, aus welchem über den in der Maschine zugeordneten Maschinenrechner 64 und einem darin enthaltenen Auswerteprogramm die im Vorratsbehälter 7 vorhandene Materialmenge ermitteln und berechnen kann.

Der Maschinenrechner 64 ist mit der Steuerungseinrichtung 65 der Hydraulikanlage, welche die Kraftübertragungseinrichtung 24, 26, 44 zur Übertragung von Gewichtskraft vom Schlepper auf das vordere Ende der Zugdeichsel und/oder die zugeordneten Kopplungselemente mit entsprechendem Druck beaufschlagt, gekoppelt. Somit kann die von der Kraftübertragungseinrichtung 25 übertragende Gewichtskraft durch den Bordrechner durch entsprechende Ansteuerung der Steuerungseinrichtung 65 der Hydraulikanlage entsprechend der von dem Wiegesensor 63 an den Maschinenrechner64 gelieferten und von ihm ausgewerteten Werte an die in dem Vorratsbehälter 7 sich befindlichen Materialmenge angepasst werden.

Von daher wird über die Kraftübertragungseinrichtung 65 Gewicht vom Schlepper auf das vordere Ende der Zugdeichsel 3 und/oder die zugeordneten Kopplungselemente in Abhängigkeit von der Belastung der Kopplungselemente der Zugdeichsel 3 und der Unterlenker 19 durch die sich im Vorratsbehälter 7 befindliche Materialmenge übertragen. Somit wird der von dem Schlepper auf, das Kopplungselemente des Anbaugerätes übertragenen Gewichtsanteil entsprechend der aus dem Vorratsbehälter 7 entnommenen Menge angepasst. Die Gewichtsübertragung wird somit an die sich im Vorratsbehälter 7 befindliche Materialmenge entsprechend angepasst. Somit wird nicht unnötig viel Gewicht von der Hinterachse des Schleppers entnommen. Somit bleibt immer eine ausreichende Tradition des Ackerschleppers gewährleistet. Eine ausreichende und hohe Traktion wird bei vollständig gefülltem Vorratstank 7 eher gebraucht als bereits teilweise entleertem Vorratsbehälter 7.

Die Wiegeeinrichtung 63 bildet die Sensoreinrichtung zur Ermittlung der sich in einen Vorratsbehälter 7 befindlichen Materialmenge. Die Sensoreinrichtung 63 übermittelt Signale in Abhängigkeit von der sich im Vorratsbehälter 7 befindliche Materialmenge an die elektronische Einstelleinrichtung 64. Die als Maschinenrechner 64 ausgebildete elektronische Einstelleinrichtung übermittelt Einstellsignale an die Stelleinrichtung 65 der Kraftübertragungseinrichtung 25, 26, 44 zur Einstellung der Größe der Gerichtskraftübertragung vom Schlepper auf das vordere Ende der Zugdeichsel 3 und stellt diese entsprechend ein.

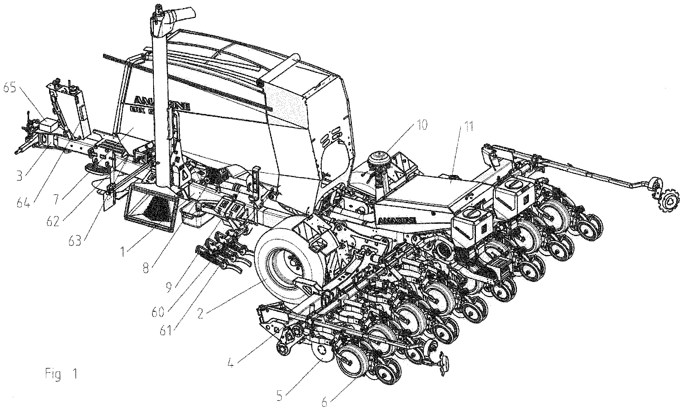

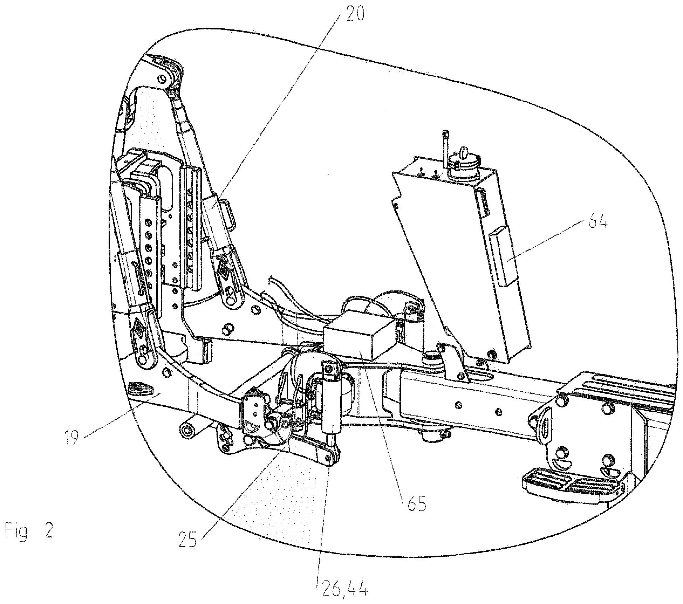

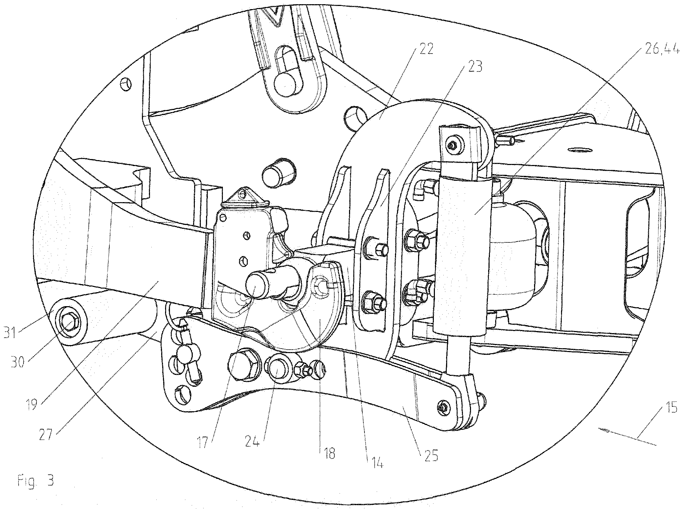

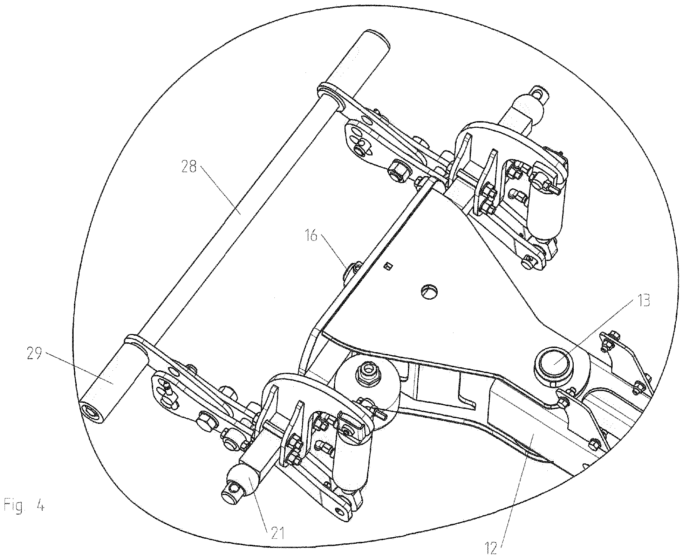

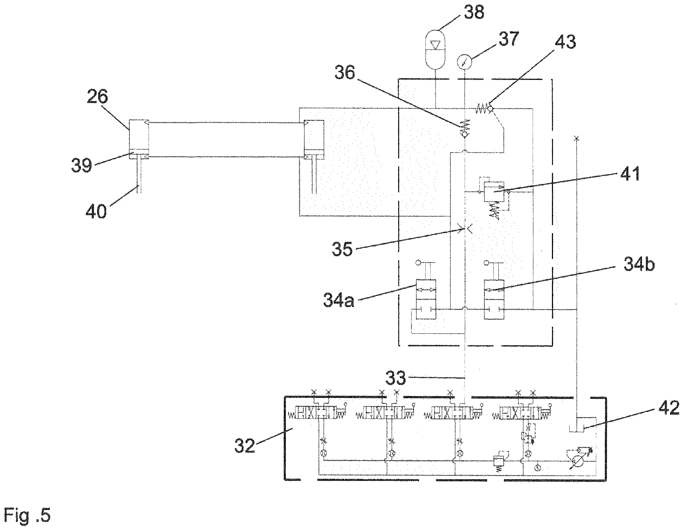

Die Fig.5 bis Fig.11 zeigen verschiedene Möglichkeiten, die Hydraulikzylinder 26 des Kraftübertragungselementes mit der Traktorhydraulik 32 zu verknüpfen und zu steuern.
Das Hydrauliksystem unterscheidet sich in jeder Darstellung. Gleiche Bauteile werden in der Figurenbeschreibung fortlaufend mit derselben Positionsnummer bezeichnet. Die verschiedenen Betriebsabläufe werden im Folgenden beschrieben, wie auch auf die Fig.1 - Fig.4 Bezug genommen wird.

In Fig.5 wird das System mit Hydrauliköl aus der Traktorhydraulikanlage 32 über die Hydraulikleitung 33 beaufschlagt und auf einen einstellbaren Betriebsdruck gebracht. Dazu wird das Ventil 34a geschlossen und das Ventil 34b geöffnet. Über die Traktorhydraulikanlage 32 wird Hydrauliköl in das System gegeben. Dieses strömt durch ein Drosselventil 35 und ein Füllventil 36, wobei der Leitung ein Manometer 37 und ein Druckspeicher 38 angeordnet ist, zu den Hydraulikzylinderböden in die doppelwirkenden Hydraulikzylinder 26. Die Kolben 39 mit den Kolbenstangen 40 fahren aus den Hydraulikzylindern 26. Die Hydraulikzylinder 26 verschwenken die Kraftübertragungshebel 25 der Kraftüberragungsvorrichtung und drücken die angeordneten Kunststoffbuchsen 29 gegen die Unterseiten der Schlepperunterlenker 19. Ist ein vorbestimmter Druck erreicht, öffnet ein Druckbegrenzungsventil 41 und das Hydrauliköl fließt zurück in den Traktoröltank 42. Der vorbestimmte Druck kann an dem Manometer 37 abgelesen werden. Bei Erreichen des eingestellten Druckes wird das Ventil 34b geschlossen und das Hydrauliköl strömt über die Hydraulikleitung 33 im Kreis zurück zu dem Traktoröltank 42. Das System ist mit Hydrauliköl beaufschlagt und der entsprechende Betriebsdruck ist erreicht. Über den gesamten Arbeitsprozess bleibt das System im vorgespannten Zustand und es wird kein zusätzlicher Volumenstrom von der Traktorhydraulik 32 benötigt. Ein Entlastungsventil 43 und das Füllventil 36 verhindern, dass sich der Druck im System abbaut.

Während des Betriebsablaufes bleibt das System vorzugsweise vorgespannt und die Kraftübertragungsvorrichtung drückt den gesamten Betrieb gegen den Schlepperunterlenker 19. Bei ungleicher Ebene zwischen Schlepper und angehängter Sämaschine beispielsweise durch eine Senke oder Hügel im Gelände, gibt der Kraftübertragungshebel 25 unterschiedliche Belastungen und Entlastungen auf die Hydraulikzylinder 26 ab.
Bei einer Belastung werden die Kolben 39 mit den Kolbenstangen 40 in eine Einfahrposition gedrückt. Das Hydrauliköl strömt von den Kolbenstangen 4o abgewandten Seiten zurück in den Druckspeicher 38. Der Druckspeicher 38 wird gefüllt und es baut sich ein Druck auf.
Zum Ausgleich wird Hydrauliköl aus dem Traktoröltank 42 zu den Kolbenstangenseiten der Hydraulikzylinder 26 geleitet.
Bei einer Entlastung der Kraftübertragungshebel 25 verfahren die Kolben 39 mit den Kolbenstangen 40 in eine Ausfahrposition. Durch den aufgebauten Druck im Druckspeicher 38 strömt das Hydrauliköl über die Hydraulikzylinderböden zurück in die Hydraulikzylinder 26 und die Kolben 39 mit den Kolbenstangen 40 fahren aus. Auf den Kolbenstangenseiten läuft das Hydrauliköl aus den Hydraulikzylindern 26 in den Traktoröltank 42. Dadurch weist das System eine Art Pufferfunktion auf.

Zum Abkuppeln der Sämaschine vom Schlepper, muss das System entspannt werden. Dazu wird das Ventil 34a geschlossen und Ventil 34b geöffnet. Damit wird wieder Hydrauliköl aus der Traktorhydraulikanlage 32 in das System geleitet. Dadurch öffnet sich das Entlastungsventil 43 und der Systemdruck entweicht in den Traktoröltank 42. Durch das entlastete System besteht keine Belastung auf die Kraftübertragungsvorrichtung und die Sämaschine kann vom Schlepper abgekoppelt werden.

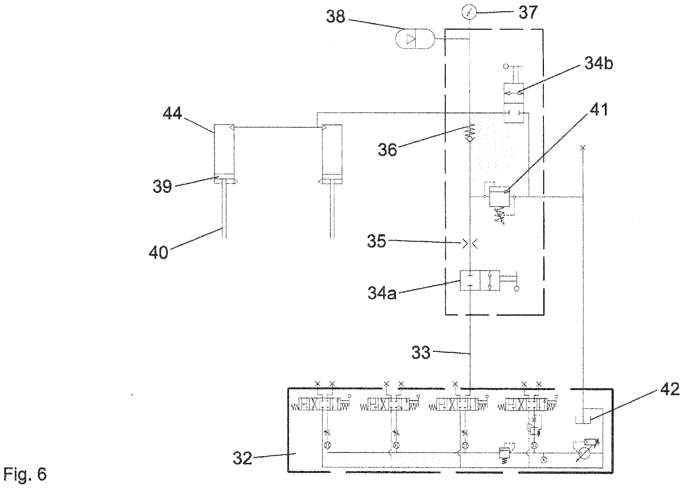

In Fig.6 wird das System mit Hydrauliköl beaufschlagt und auf einen einstellbaren Betriebsdruck gebracht. Dazu wird das Ventil 34a geschlossen und das Ventil 34b geöffnet. Über die Traktorhydraulikanlage 32 wird Hydrauliköl durch die Hydraulikleitung 33 in das System gegeben. Dieses strömt durch ein Drosselventil 35 und ein Füllventil 36, wobei der Leitung ein Manometer 37 und ein Druckspeicher 38 zugeordnet ist, zu den Hydraulikzylinderböden in die einfachwirkenden Hydraulikzylinder 44. Die Kolben 39 mit den Kolbenstangen 40 fahren aus den Hydraulikzylindern 44. Die Hydraulikzylinder 44 verschwenken die Kraftübertragungshebel 25 der Kraftüberragungsvorrichtung und drücken die angeordneten Kunstoffbuchsen 29 gegen die Unterseiten der Schlepperunterlenker 19. Ist ein vorbestimmter Druck erreicht, öffnet ein Druckbegrenzungsventil 41 und das Hydrauliköl fließt zurück in den Traktoröltank 42. Der vorbestimmte Druck kann an dem Manometer 37 abgelesen werden. Bei Erreichen des eingestellten Druckes wird das Ventil 34b geschlossen. Das System ist mit Hydrauliköl beaufschlagt und der entsprechende Betriebsdruck ist erreicht. Über den gesamten Arbeitsprozess bleibt das System im vorgespannten Zustand und es wird kein zusätzlicher Volumenstrom von der Traktorhydraulikanlage 32 benötigt. Das Füllventil 36 verhindert, dass sich der Druck im System abbaut.

Während des Betriebsablaufes, bleibt das System vorgespannt und die Kraftübertragungsvorrichtung drückt den gesamten Betrieb gegen den Schlepperunterlenker 19. Bei ungleicher Ebene zwischen Schlepper und angehängter Sämaschine beispielsweise durch eine Senke oder Hügel im Gelände, gibt der Kraftübertragungshebel 25 unterschiedliche Belastungen und Entlastungen auf die Hydraulikzylinder 44 ab.

Bei einer Belastung werden die Kolben 39 mit den Kolbenstangen 40 in eine Einfahrposition gedrückt. Das Hydrauliköl strömt von den Kolbenstangen abgewandten Seiten zurück in den Druckspeicher 38. Der Druckspeicher 38 wird gefüllt und es baut sich ein Druck auf.

Bei einer Entlastung der Kraftübertragungshebel 25 verfahren die Kolben 39 mit den Kolbenstangen 40 in eine Ausfahrposition. Durch den aufgebauten Druck im Druckspeicher 38 strömt das Hydrauliköl über die Hydraulikzylinderböden zurück in die Hydraulikzylinder 44 und die Kolben 39 mit den Kolbenstangen 40 fahren aus. Dadurch weist das System eine Art Pufferfunktion auf.

Zum Abkuppeln der Sämaschine vom Schlepper, muss das System entspannt werden. Dazu wird das Ventil 34b geöffnet und das Hydrauliköl entweicht in den Traktoröltank 42. Durch das entlastete System besteht keine Belastung auf die Kraftübertragungsvorrichtung und die Sämaschine kann vom Schlepper abgekoppelt werden.

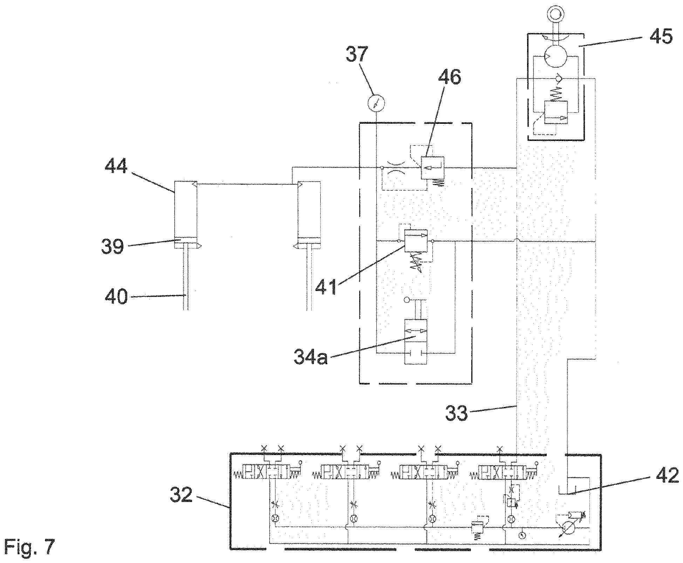

In Fig.7 wird das System mit Hydrauliköl beaufschlagt. Durch einen Gebläseantrieb 45 wird das Hydrauliköl auf einen einstellbaren, gleichmäßigen Betriebsdruck gebracht. Dazu wird das Ventil 34a geschlossen und der Gebläseantrieb 45 eingeschaltet. Über den Gebläseantrieb 45 wird das von der Traktorhydraulikanlage 32 verfügbare Hydrauliköl durch die Hydraulikleitung 33 in das System gedrückt. Dieses strömt durch ein Stromregelventil 46, wobei in der Leitung ein Manometer 37 angerordnet ist, zu den Hydraulikzylinderböden in die einfachwirkenden Hydraulikzylinder 44. Die Kolben 39 mit den Kolbenstangen 40 fahren aus den Hydraulikzylindern 44. Die Hydraulikzylinder 44 verschwenken die Kraftübertragungshebel 25 der Kraftüberragungsvorrichtung und drücken die angeordneten Kunstoffbuchsen 29 gegen die Unterseiten der Schlepperunterlenker 19. Ist ein vorbestimmter Druck erreicht, öffnet ein Druckbegrenzungsventil 41 und das Hydrauliköl fließt zurück in den Traktoröltank 42. Der Druck wird über das Manometer 37 voreingestellt.

Während des Betriebsablaufes, bleibt das System vorgespannt und die Kraftübertragungsvorrichtung drückt den gesamten Betrieb gegen den Schlepperunterlenker 19. Bei ungleicher Ebene zwischen Schlepper und angehängter Sämaschine beispielsweise durch eine Senke oder Hügel im Gelände, gibt der Kraftübertragungshebel 25 unterschiedliche Belastungen und Entlastungen auf die Hydraulikzylinder 44 ab.

Bei einer Belastung werden die Kolben 39 mit den Kolbenstangen 40 in eine Einfahrposition gedrückt. Das Hydrauliköl strömt von den Kolbenstangen abgewandten Seiten über das Druckbegrenzungsventil 41 zurück in den Traktoröltank 42.

Bei einer Entlastung der Kraftübertragungshebel 25 verfahren die Kolben 39 mit den Kolbenstangen 40 in eine Ausfahrposition. Der Gebläseantrieb 45 drückt neues Hydrauliköl in das System. Dadurch strömt das Hydrauliköl über die Hydraulikzylinderböden in die Hydraulikzylinder 44 und die Kolben 39 mit den Kolbenstangen 40 fahren aus. Benötigen die Hydraulikzylinder 44 kein Hydrauliköl, d.h. es liegt ein Überdruck an, so öffnet das Druckbegrenzungsventil 41 und das Hydrauliköl fließt zurück in den Traktoröltank 42. Dadurch weist das System eine Art Pufferfunktion auf.

Zum Abkuppeln der Sämaschine vom Schlepper, muss das System entspannt werden. Dazu wird das Ventil 34a geöffnet und das Hydrauliköl entweicht in den Traktoröltank 42. Durch das entlastete System besteht keine Belastung auf die Kraftübertragungsvorrichtung und die Sämaschine kann vom Schlepper abgekoppelt werden.

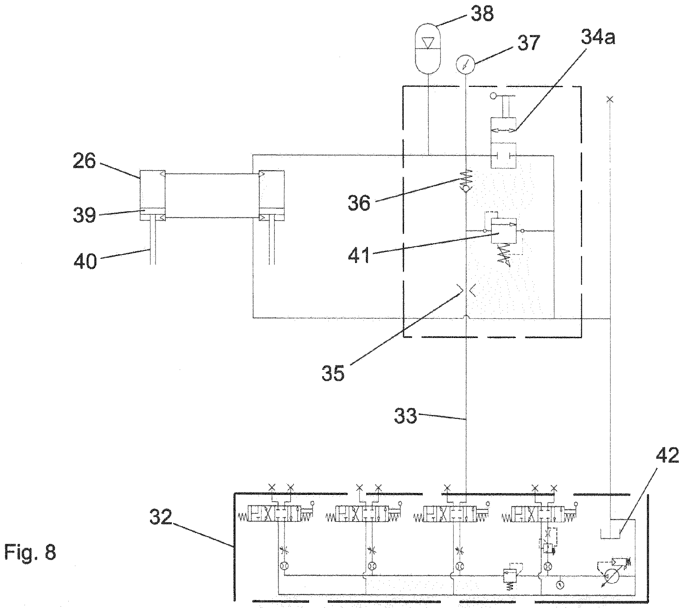

In Fig.8 wird das System mit Hydrauliköl beaufschlagt und auf einen einstellbaren Betriebsdruck gebracht. Dazu wird das Ventil 34a geschlossen. Über die Traktorhydraulikanlage 32 wird Hydrauliköl durch die Hydraulikleitung 33 in das System gegeben. Dieses strömt durch ein Drosselventil 35 und ein Füllventil 36, wobei in der Leitung ein Manometer 37 und ein Druckspeicher 38 angeordnet ist, zu den Hydraulikzylinderböden in die doppelwirkenden Hydraulikzylinder 26. Die Kolben 39 mit den Kolbenstangen 40 fahren aus den Hydraulikzylindern 26. Die Hydraulikzylinder 26 verschwenken die Kraftübertragungshebel 25 der Kraftüberragungsvorrichtung und drücken die angeordneten Kunststoffbuchsen 29 gegen die Unterseiten der Schlepperunterlenker 19. Ist ein vorbestimmter Druck erreicht, öffnet ein Druckbegrenzungsventil 41 und das Hydrauliköl fließt zurück in den Traktoröltank 42. Ist kein Druckbegrenzungsventil 41 vorhanden kann der vorbestimmte Druck an dem Manometer 37 abgelesen werden. Bei Erreichen des Druckes wird die Traktorhydraulikanalage 32 abgeschaltet. Das System ist mit Hydrauliköl beaufschlagt und der entsprechende Betriebsdruck ist erreicht. Über den gesamten Arbeitsprozess bleibt das System im vorgespannten Zustand und es wird kein zusätzlicher Volumenstrom von der Traktorhydraulikanlage 32 benötigt. Ein Füllventil 36 verhindern, dass sich der Druck im System abbaut.

Während des Betriebsablaufes, bleibt das System vorgespannt und die Kraftübertragungsvorrichtung drückt den gesamten Betrieb gegen den Schlepperunterlenker 19. Bei ungleicher Ebene zwischen Schlepper und angehängter Sämaschine beispielsweise durch eine Senke oder Hügel im Gelände, gibt der Kraftübertragungshebel 25 unterschiedliche Belastungen und Entlastungen auf die Hydraulikzylinder 26 ab.

Bei einer Belastung werden die Kolben 39 mit den Kolbenstangen 40 in eine Einfahrposition gedrückt. Das Hydrauliköl strömt von den Kolbenstangen abgewandten Seiten zurück in den Druckspeicher 38. Der Druckspeicher 38 wird gefüllt und es baut sich ein Druck auf.

Zum Ausgleich wird Hydrauliköl aus dem Traktoröltank 42 zu den Kolbenstangenseiten der Hydraulikzylinder 26 geleitet.
Bei einer Entlastung der Kraftübertragungshebel 25 verfahren die Kolben 39 mit den Kolbenstangen 40 in eine Ausfahrposition. Durch den aufgebauten Druck im Druckspeicher 38 strömt das Hydrauliköl über die Hydraulikzylinderböden zurück in die Hydraulikzylinder 26 und die Kolben 39 mit den Kolbenstangen 40 fahren aus. Auf den Kolbenstangenseiten läuft das Hydrauliköl aus den Hydraulikzylindern 26 in den Traktoröltank 42. Dadurch weist das System eine Art Pufferfunktion auf.

Zum Abkuppeln der Sämaschine vom Schlepper, muss das System entspannt werden. Dazu wird das Ventil 34a geöffnet und der Systemdruck entweicht in den Traktoröltank 42. Durch das entlastete System besteht keine Belastung auf die Kraftübertragungsvorrichtung und die Sämaschine kann vom Schlepper abgekoppelt werden.

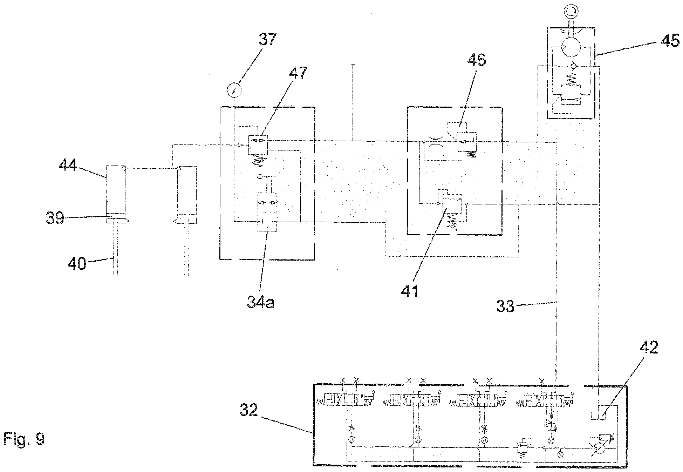

In Fig.9 wird das System mit Hydrauliköl beaufschlagt. Durch einen Gebläseantrieb 45 wird das Hydrauliköl auf einen einstellbaren, gleichmäßigen Betriebsdruck gebracht. Dazu wird das Ventil 34a geschlossen und der Gebläseantrieb 45 eingeschaltet. Über den Gebläseantrieb 45 wird das von der Traktorhydraulikanlage 32 verfügbare Hydrauliköl durch die Hydraulikleitung 33 in das System gedrückt. Dieses strömt durch ein Stromregelventil 46 und ein Druckregelventil 47, wobei der Leitung ein Manometer 37 zugeordnet ist, zu den Hydraulikzylinderböden in die einfachwirkenden Hydraulikzylinder 44. Mit dem Druckregelventil 47 wird der geforderte Druck voreingestellt. Die Kolben 39 mit den Kolbenstangen 40 fahren aus den Hydraulikzylindern 44. Die Hydraulikzylinder 44 verschwenken die Kraftübertragungshebel 25 der Kraftüberragungsvorrichtung und drücken die angeordneten Kunststoffbuchsen 29 gegen die Unterseiten der Schlepperunterlenker 19. Ist ein vorbestimmter Maximaldruck erreicht, öffnet ein Druckbegrenzungsventil 41 und das Hydrauliköl fließt zurück in den Traktoröltank 42.

Während des Betriebsablaufes, bleibt das System vorgespannt und die Kraftübertragungsvorrichtung drückt den gesamten Betrieb gegen den Schlepperunterlenker 19. Bei ungleicher Ebene zwischen Schlepper und angehängter Sämaschine beispielsweise durch eine Senke oder Hügel im Gelände, gibt der Kraftübertragungshebel 25 unterschiedliche Belastungen und Entlastungen auf die Hydraulikzylinder 44 ab.

Bei einer Belastung werden die Kolben 39 mit den Kolbenstangen 40 in eine Einfahrposition gedrückt. Das Hydrauliköl strömt von den Kolbenstangen abgewandten Seiten über das Druckbegrenzungsventil 41 zurück in den Traktoröltank 42.

Bei einer Entlastung der Kraftübertragungshebel 25 verfahren die Kolben 39 mit den Kolbenstangen 40 in eine Ausfahrposition. Der Gebläseantrieb 45 drückt neues Hydrauliköl in das System. Dadurch strömt das Hydrauliköl über die Hydraulikzylinderböden in die Hydraulikzylinder 44 und die Kolben 39 mit den Kolbenstangen 40 fahren aus. Benötigen die Hydraulikzylinder 44 kein Hydrauliköl, d.h. es liegt ein Überdruck an, so öffnet das Druckbegrenzungsventil 41 und das Hydrauliköl fließt zurück in den Traktoröltank 42. Dadurch weist das System eine Art Pufferfunktion auf.

Zum Abkuppeln der Sämaschine vom Schlepper, muss das System entspannt werden. Dazu wird das Ventil 34a geöffnet und das Hydrauliköl entweicht in den Traktoröltank 42. Durch das entlastete System besteht keine Belastung auf die Kraftübertragungsvorrichtung und die Sämaschine kann vom Schlepper abgekoppelt werden.

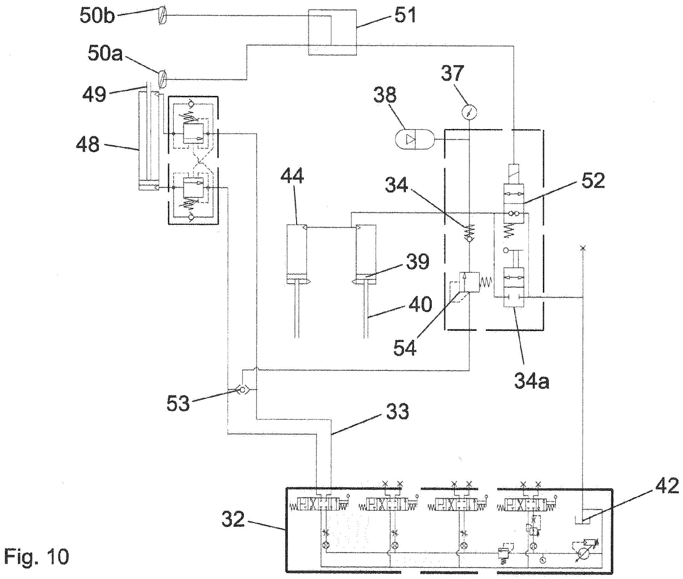

In Fig.10 wird die Kraftübertragungsvorrichtung automatisch während des Aushubs des Heckrahmens 4 vorgespannt und bei Erreichen der Hydraulikzylinderendlagen wieder entspannt.

Ein doppelwirkender Aushubzylinder 48 wird über die Traktorhydraulikanlage 32 angesteuert und verfahren. Die Kolbenstange 49 des Aushubzylinders 48 verfährt beim Ausheben und Absenken des Heckrahmens 4 zwischen zwei Endlagen 50a + 50b. An jeder Endlage ist jeweils ein Sensor angeordnet. Die Sensoren geben ein Signal an eine Auswerteschaltung 51, wenn der Kolbenstangenkopf die jeweilige Endlage erreicht. Das ausgewertete Schaltsignal wird an das Hydrauliksystem der Kraftübertragungsvorrichtung weitergeleitet.

Das Schaltsignal gibt einen Impuls auf ein Entlastungsventil 52 und es wird geöffnet. Befindet sich der Kolbenstangenkopf der Aushubhydraulik zwischen den beschriebenen Endlagen 50a + 50b, ist das Entlastungsventil 52 geschlossen.

Ausgehend von der Traktorhydraulikanlage 32 wird Hydrauliköl über ein in die Aushubleitung ausgebildetes Wechselventil 53 in das System gegeben. Das Hydrauliköl strömt durch ein Druckminderventil 54 und ein Füllventil 36, wobei die Leitung ein Manometer 37 und einen Druckspeicher 38 aufweist, zu den Hydraulikzylinderböden in die einfachwirkenden Hydraulikzylinder 44. Die Kolben 39 mit den Kolbenstangen 40 fahren aus den Hydraulikzylindern 44. Die Hydraulikzylinder 44 verschwenken die Kraftübertragungshebel 25 der Kraftüberragungsvorrichtung und drücken die angeordneten Kunststoffbuchsen 29 gegen die Unterseiten der Schlepperunterlenker 19. Ist ein vorbestimmter Druck erreicht, wird die Ölzufuhr durch das Druckminderventil 54 unterbrochen. Das System ist mit Hydrauliköl beaufschlagt und der entsprechende Betriebsdruck ist erreicht. Über den gesamten Arbeitsprozess bleibt das System im vorgespannten Zustand und es wird kein zusätzlicher Volumenstrom von der Traktorhydraulikanlage 32 benötigt. Das Füllventil 36 verhindert, dass sich der Druck im System abbaut.

Wird der Heckrahmen 4 angehoben oder gesenkt und der Kolbenstangenkopf des Aushubzylinders 48 erreicht eine jeweilige Endlage 50a + 50b, wird das Entlastungsventil 52 auf freien Rücklauf geschaltet. Das Hydrauliköl gelangt so zurück in den Traktoröltank 42 und entlastet die Kraftübertragungsvorrichtung. Zum An- und Abkuppeln der Sämaschine vom Schlepper, muss das System entspannt werden. Dazu wird das Ventil 34a geöffnet und das Hydrauliköl entweicht in den Traktoröltank 42. Durch das entlastete System besteht keine Belastung auf die Kraftübertragungsvorrichtung und die Sämaschine kann vom Schlepper an- bzw. abgekoppelt werden.

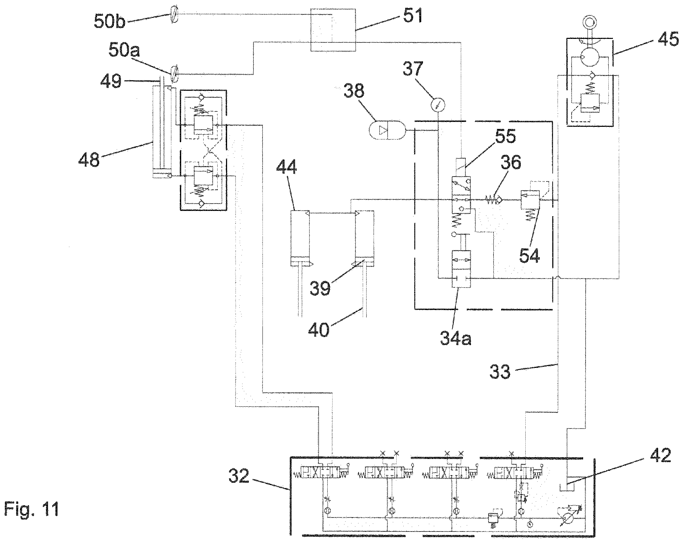

In Fig.11 wird das Kraftübertragungselement automatisch während des Aushubs des Heckrahmens 4 vorgespannt und bei Erreichen der Hydraulikzylinderendlagen wieder entspannt.

Ein doppelwirkender Aushubzylinder 48 wird über die Traktorhydraulikanlage 32 angesteuert und verfahren. Die Kolbenstange 49 des Aushubzylinders 48 verfährt beim Ausheben und Absenken des Heckrahmens 4 zwischen zwei Endlagen 50a + 50b. An jeder Endlage ist jeweils ein Sensor angeordnet. Die Sensoren geben ein Signal an eine Auswerteschaltung 51, wenn der Kolbenstangenkopf die jeweilige Endlage 50a + 50b erreicht. Das ausgewertete Schaltsignal wird an das Hydrauliksystem der Kraftübertragungsvorrichtung weitergeleitet.

Das Schaltsignal gibt einen Impuls auf ein Entlastungs- und Belastungsumschaltventil 55 und es wird geöffnet. Befindet sich der Kolbenstangenkopf der Aushubhydraulik zwischen den beschriebenen Endlagen 50a + 50b, ist das Entlastungs- und Belastungsumschaltventil 55 geschlossen.

Aus der Traktorhydraulikanlage 32 wird das System durch die Hydraulikleitung 33 mit Hydrauliköl beaufschlagt. Durch einen Gebläseantrieb 45 wird das Hydrauliköl auf einen einstellbaren, gleichmäßigen Betriebsdruck gebracht. Dazu wird das Ventil 34a geschlossen und der Gebläseantrieb 45 eingeschaltet. Über den Gebläseantrieb 45 wird das von der Traktorhydraulikanlage 32 verfügbare Hydrauliköl in das System gedrückt. Dieses strömt durch ein Druckminderventil 54, Füllventil 36 und das Entlastungs- und Belastungsumschaltventil 55 über ein Manometer 37 und Druckspeicher 38 zu den Hydraulikzylinderböden in die einfachwirkenden Hydraulikzylinder 44.

Die Kolben 39 mit den Kolbenstangen 40 fahren aus den Hydraulikzylindern 44. Die Hydraulikzylinder 44 verschwenken die Kraftübertragungshebel 25 der Kraftüberragungsvorrichtung und drücken die angeordneten Kunstoffbuchsen 29 gegen die Unterseiten der Schlepperunterlenker 19. Ist ein vorbestimmter Druck erreicht, wird die Ölzufuhr durch das Druckminderventil 54 unterbrochen. Das System ist mit Hydrauliköl beaufschlagt und der entsprechende Betriebsdruck ist erreicht. Über den gesamten Arbeitsprozess bleibt das System im vorgespannten Zustand und es wird kein zusätzlicher Volumenstrom von der Traktorhydraulikanlage 32 benötigt. Das Füllventil 36 verhindert, dass sich der Druck im System abbaut.

Wird der Heckrahmen 4 angehoben oder gesenkt und der Kolbenstangenkopf des Aushubzylinders 48 erreicht eine jeweilige Endlage, wird das Entlastungs- und Belastungsumschaltventil 55 auf freien Rücklauf geschaltet. Das Hydrauliköl gelangt so zurück in den Traktoröltank 42 und entlastet die Kraftübertragungsvorrichtung.

Zum An- und Abkuppeln der Sämaschine vom Schlepper, muss das System entspannt werden. Dazu wird das Ventil 34a geöffnet und das Hydrauliköl entweicht in den Traktoröltank 42. Durch das entlastete System besteht keine Belastung auf die Kraftübertragungsvorrichtung und die Sämaschine kann vom Schlepper an- bzw. abgekoppelt werden.

## Patentansprüche

1. Aus einem Schlepper und einer an einem Schlepper anhängbare gezogene Landmaschine, insbesondere Bodenbearbeitungsgerät oder Sämaschine bestehende landwirtschaftliche Kombination mit einem sich über Laufräder (2) auf dem Boden abstützenden Rahmen (1), eine an der Vorderseite des Rahmens (1) angeordneten Zugdeichsel (3), welche über an der Zugdeichsel (3) angeordnete Kopplungselemente (17) an die Unterlenker (19) eines Schleppers anzukuppeln ist, und auf der Rückseite des Rahmens (1) hinter den Laufrädern (2) angeordneten und mit einer Aushubeinrichtung anhebbaren Bodenbearbeitungswerkzeugen (5) und/oder Säaggregaten (6), wobei an dem Rahmen (1) und zumindest im Wesentlichen vor den Laufrädern (2) zumindest ein das auszubringende Material, insbesondere Dünger in größerer Menge aufnehmender Vorratsbehälter (7) angeordnet ist, **dadurch gekennzeichnet, dass** an der Zugdeichsel (3) oder den der Zugdeichsel (3) zugeordneten Kupplungselementen (17) mittels Gelenkanordnungen eine jeweils mit den Unterlenkern (19) des Schleppers zusammenwirkende und zumindest einen Hydraulikzylinder (26, 44) aufweisende Kraftübertragungseinrichtung, die vorzugsweise verschwenkbar angeordnete Kraftübertragungshebel (25) aufweist, angeordnet ist, dass über die Kraftübertragungseinrichtung (25) Gewichtskraft vom Schlepper auf das vordere Ende der Zugdeichsel (3) und/oder die zugeordneten Kopplungselemente (17) in Abhängigkeit von der Belastung der Kopplungselemente (17) der Zugdeichsel (3) und der Unterlenker (19) durch die sich im Vorratsbehälter (7) befindliche Materialmenge übertragen wird, dass eine Sensoreinrichtung (63) zur Ermittlung der sich in dem zumindest einen Vorratsbehälter (7) befindlichen Materialmenge vorgesehen ist, dass die Sensoreinrichtung (63) Signale in Abhängigkeit von der sich im Vorratsbehälter (7) befindliche Materialmenge an eine elektronische Einstelleinrichtung (64) übermittelt, dass die elektronische Einstelleinrichtung (64) Einstellsignale an die Kraftübertragungseinrichtung (25, 26, 44, 65) zur Einstellung der Größe der Gerichtskraftübertragung vom Schlepper auf das vordere Ende der Zugdeichsel (3) übermittelt und diese entsprechend einstellt, dass das sich im Bereich des jeweiligen Unterlenkers (19) befindliche Ende des jeweiligen Kraftübertragungshebels (25) jeweils mittels eines Hydraulikzylinders (26, 44) gegen die Unterseite des jeweiligen Unterlenkers (19) gedrückt wird, und Gewichtskraft vom Schlepper auf das vordere Ende der Zugdeichsel (3) und/oder die zugeordneten Kopplungselemente (17) übertragen wird.

2. Landwirtschaftliche Kombination nach Anspruch 1, **dadurch gekennzeichnet, dass** die Sensoreinrichtung (3) zur Ermittlung des in dem zumindest einen Vorratsbehälter (7) befindliche Materialmenge als Wiegesensor ausgebildet ist.

3. Landwirtschaftliche Kombination nach zumindest einem der vorstehenden Ansprüche, **dadurch gekennzeichnet**, der jeweilige Hydraulikzylinder (26, 44) zwischen dem mit dem Unterlenker (19) zusammenwirkenden Ende abgewandten Endbereich des Kraftübertragungshebel (25) und dem vorderen Ende der Zugdeichsel (3) und/oder der an der Zugdeichsel (3) angeordneten Kupplungselement (27) angeordnet ist.

4. Landwirtschaftliche Kombination nach zumindest einem der vorstehenden Ansprüche, **dadurch gekennzeichnet, dass** zumindest einer der Hebelarme, vorzugsweise der mit der Unterseite des Unterlenkers zusammenwirkende Hebelarm des jeweiligen Kraftübertragungshebels (25) aus zwei in verschiedenen Stellungen zueineinander einstellbaren Teilarmen (27) besteht.

5. Landwirtschaftliche Kombination nach zumindest einem der vorstehenden Ansprüche, wobei die an der Vorderseite der Zugdeichsel (3) angeordneten Kupplungselemente (17) einen um eine aufrechte Schenkachse schwenkbar an der Zugdeichsel (3) angeordneten Querbalken aufweisen, **dadurch gekennzeichnet, dass** an dem Querbalken zur Anordnung der beiden Kraftübertragungshebel (25) und des zwischen dem jeweiligen Kraftübertragungshebel (25) und der Zugdeichsel (3) und Kupplungselementen angeordneten Hydraulikzylinders (26, 44) ein zweiarmiger Traghebel (22) drehfest angeordnet ist.

6. Landwirtschaftliche Kombination nach zumindest einem der vorstehenden Ansprüche, **dadurch gekennzeichnet, dass** die Aushubeinrichtung für die hinter den Laufrädern (2) angeordneten Bodenbearbeitungswerkzeuge und/oder Säaggregate zumindest einen Hydraulikzylinder (26, 44) aufweist, dass der zumindest eine Hydaulikzylinder (26, 44) der Kraftübertragungseinrichtung über eine hydraulische Betätigungseinrichtung derart mit Druck beaufschlagbar sind, dass Schleppergewichtskraft auf das vordere Ende der Zugdeichsel (3) und/oder die zugeordneten Kopplungselemente (17) zumindest dann übertragen wird, wenn die die hinter den Laufrädern (2) angeordneten Bodenbearbeitungswerkzeuge (5) und/oder Säaggregate über die Aushubeinrichtung angehoben werden und/oder angehoben sind.

7. Landwirtschaftliche Kombination nach Anspruch 3, **dadurch gekennzeichnet, dass** die Hydraulikzylinder der Kraftübertragungseinrichtung als doppelwirkende Hydraulikzylinder (26) ausgebildet sind.

8. Landwirtschaftliche Kombination nach Anspruch 3, **dadurch gekennzeichnet, dass** die Hydraulikzylinder (26, 44) der Kraftübertragungseinrichtung zum Übertragen von Schleppergewichtskraft auf das vordere Ende der Zugdeichsel (3) und/oder die zugeordneten Kopplungselemente (17) unmittelbar vor oder beim Einleiten des Aushebens der Bodenbearbeitungswerkzeuge und/oder Säaggregate über die Aushubeinrichtung mit Druck beaufschlagt werden.

## Claims

1. Agricultural combination consisting of a tractor and an agricultural machine attachable to and pulled by a tractor, in particular soil cultivation device or seeder, with a frame (1) supported on the ground via running wheels (2), a tow bar (3) which is arranged on the front side of the frame (1) and is to be coupled to the lower links (19) of a tractor via coupling elements (17) arranged on the tow bar (3), and soil cultivation tools (5) and/or sowing units (6) which are arranged on the rear side of the frame (1) behind the running wheels (2) and can be raised with a lifting device, wherein at least one storage container (7) accommodating the material to be discharged, in particular a relatively large quantity of fertiliser, is arranged on the frame (1) and at least substantially in front of the running wheels (2), **characterized in that** a force transmission device which in each case interacts with the lower links (19) of the tractor and has at least one hydraulic cylinder (26, 44) and preferably has pivotably arranged force transmission levers (25) is arranged on the tow bar (3) or on the coupling elements (17), which are assigned to the tow bar (3), by means of hinge arrangements, **in that** weight is transmitted from the tractor to the front end of the tow bar (3) via the force transmission device (25) and/or the assigned coupling elements (17) depending on the loading of the coupling elements (17) of the tow bar (3) and of the lower links (19) by means of the quantity of material located in the storage container (7), **in that** a sensor device (63) is provided for determining the quantity of material located in the at least one storage container (7), **in that** the sensor device (63) transmits signals to an electronic adjustment device (84) depending on the quantity of material in the storage container (7), **in that** the electronic adjustment device (64) transmits adjustment signals to the force transmission device (25, 26, 44, 65) for adjusting the size of the transmission of weight from the tractor to the front end of the tow bar (3) and correspondingly adjusts the latter, **in that** that end of the respective force transmission lever (25) which is located in the region of the respective lower link (19) is pressed in each case by means of a hydraulic cylinder (26, 44) against the lower side of the respective lower link (19), and the weight is transmitted from the tractor to the front end of the tow bar (3) and/or to the assigned coupling elements (17).

2. Agricultural combination according to Claim 1, **characterized in that** the sensor device (3) for determining the quantity of material located in the at least one storage container (7) is designed as a weight sensor.

3. Agricultural combination according to at least either of the preceding claims, **characterized in that** the respective hydraulic cylinder (26, 44) is arranged between that end region of the force transmission lever (25) which faces away from end interacting with the lower link (19) and the front end of the tow bar (3) and/or the coupling element (27) arranged on the tow bar (3).

4. Agricultural combination according to at least one of the preceding claims, **characterized in that** at least one of the lever arms, preferably that lever arm of the respective force transmission lever (25) which interacts with the lower side of the lower link, consists of two partial arms (27) which are adjustable in different positions with respect to each other.

5. Agricultural combination according to at least one of the preceding claims, wherein the coupling elements (17) which are arranged on the front side of the tow bar (3) have a transverse bar which is arranged on the tow bar (3) so as to be pivotable about a vertical pivot axis, **characterized in that** a two-armed supporting lever (22) is arranged non-rotatably on the transverse bar for the arrangement of the two force transmission levers (25) and the hydraulic cylinder (26, 44) arranged between the respective force transmission lever (25) and the tow bar (3) and coupling elements.

6. Agricultural combination according to at least one of the preceding claims, **characterized in that** the lifting device for the soil cultivation tools and/or sowing units arranged behind the running wheels (2) has at least one hydraulic cylinder (24, 44), **in that** the at least one hydraulic cylinder (26, 44) of the force transmission device is chargeable with pressure via a hydraulic actuating device in such a manner that tractor weight is transmitted to the front end of the tow bar (3) and/or to the assigned coupling elements (17) at least when the soil cultivation tools (5) and/or sowing units arranged behind the running wheels (2) are lifted and/or have been lifted via the lifting device.

7. Agricultural combination according to Claim 3, **characterized in that** the hydraulic cylinders of the force transmission device are designed as double-action hydraulic cylinders (26).

8. Agricultural combination according to Claim 3, **characterized in that** the hydraulic cylinders (26, 44) of the force transmission device for transmitting tractor weight to the front end of the tow bar (3) and/or to the assigned coupling elements (17) are charged with pressure immediately before or during the initiation of the lifting of the soil cultivation tools and/or sowing units via the lifting device.

## Revendications

1. Combinaison agricole constituée d'un tracteur et d'une machine agricole tractée pouvant être accrochée au tracteur, en particulier un appareil de préparation du sol ou un semoir, comprenant un châssis (1) s'appuyant au sol par le biais de roues de roulement (2), un timon de traction (3) disposé sur le côté avant du châssis (1), devant être accouplé par le biais d'éléments d'accouplement (17) disposés sur le timon de traction (3) aux bras oscillants inférieurs (19) d'un tracteur, et des outils de travail du sol (5) et/ou des éléments semeurs (6) disposés sur le côté arrière du châssis (1) derrière les roues de roulement (2) et pouvant être soulevés au moyen d'un dispositif de levage, au moins un réservoir (7) recevant le matériau à épandre, en particulier des engrais en grande quantité, étant disposé au niveau du châssis (1) et au moins essentiellement avant les roues de roulement (2), **caractérisée en ce qu'**un dispositif de transfert de force, qui présente de préférence des leviers de transfert de force (25) disposés de manière pivotante, coopérant à chaque fois avec les bras oscillants inférieurs (19) du tracteur et présentant au moins un cylindre hydraulique (26, 44), est disposé au niveau du timon de traction (3) ou des éléments d'accouplement (17) associés au timon de traction (3), au moyen d'agencements d'articulation, **en ce que** la force de pesanteur est transmise par le biais du dispositif de transfert de force (25) depuis le tracteur à l'extrémité avant du timon de traction (3) et/ou aux éléments d'accouplement associés (17) en fonction de la charge des éléments d'accouplement (17) du timon de traction (3) et des bras oscillants inférieurs (19) par la quantité de matériau se trouvant dans le réservoir (7), **en ce qu'**un dispositif de capteur (63) est prévu pour déterminer la quantité de matériau se trouvant dans l'au moins un réservoir (7), **en ce que** le dispositif de capteur (63) transmet des signaux en fonction de la quantité de matériau se trouvant dans le réservoir (7) à un dispositif de réglage électronique (64), **en ce que** le dispositif de réglage électronique (64) transmet des signaux de réglage au dispositif de transfert de force (25, 26, 44, 65) pour ajuster le degré du transfert de la force de pesanteur du tracteur à l'extrémité avant du timon de traction (3) et les ajuste de manière correspondante, **en ce que** l'extrémité du levier de transfert de force respectif (25) se trouvant dans la région du bras oscillant inférieur respectif (19) est à chaque fois pressée au moyen d'un cylindre hydraulique (26, 44) contre le côté inférieur du bras oscillant inférieur respectif (19), et la force de pesanteur est transmise depuis le tracteur à l'extrémité avant du timon de traction (3) et/ou aux éléments d'accouplement associés (17).

2. Combinaison agricole selon la revendication 1, **caractérisée en ce que** le dispositif de capteur (3) est réalisé sous forme de capteur de pesée pour détecter la quantité de matériau se trouvant dans l'au moins un réservoir (7).

3. Combinaison agricole selon au moins l'une des revendications précédentes, **caractérisée en ce que** le cylindre hydraulique respectif (26, 44) est disposé entre la région d'extrémité du levier de transfert de force (25) opposée avec extrémité coopérant avec le bras oscillant inférieur (19) et l'extrémité avant du timon de traction (3) et/ou l'élément d'accouplement (27) disposé au niveau du timon de traction (3).

4. Combinaison agricole selon au moins l'une des revendications précédentes, **caractérisée en ce qu'**au moins l'un des bras de levier, de préférence le bras de levier coopérant avec le côté inférieur du bras oscillant inférieur du levier de transfert de force respectif (25), se compose de deux bras partiels (27) pouvant être ajustés l'un par rapport à l'autre dans différentes positions.

5. Combinaison agricole selon au moins l'une quelconque des revendications précédentes, dans laquelle les éléments d'accouplement (17) disposés au niveau du côté avant du timon de traction (3) présentent une poutre transversale disposée sur le timon de traction (3) de manière à pouvoir pivoter autour d'un axe de pivotement vertical, **caractérisée en ce qu'**un levier de support à deux bras (22) est disposé de manière solidaire en rotation au niveau de la poutre transversale pour l'agencement des deux leviers de transfert de force (25) et du cylindre hydraulique (26, 44) disposé entre le levier de transfert de force respectif (25) et le timon de traction (3) et les éléments d'accouplement.

6. Combinaison agricole selon au moins l'une des revendications précédentes, **caractérisée en ce que** le dispositif de levage pour les outils de traitement du sol et/ou pour les éléments semeurs disposés derrière les roues de roulement (2) présente au moins un cylindre hydraulique (26, 44), **en ce que** l'au moins un cylindre hydraulique (26, 44) du dispositif de transfert de force peut être sollicité en pression par le biais d'un dispositif d'actionnement hydraulique de telle sorte que la force de pesanteur du tracteur soit transmise à l'extrémité avant du timon de traction (3) et/ou aux éléments d'accouplement associés (17) au moins lorsque les outils de traitement du sol (5) et/ou les éléments semeurs disposés derrière les roues de roulement (2) sont ou vont être soulevés par le biais du dispositif de levage.

7. Combinaison agricole selon la revendication 3, **caractérisée en ce que** les cylindres hydrauliques du dispositif de transfert de force sont réalisés sous forme de cylindres hydrauliques à double action (26).

8. Combinaison agricole selon la revendication 3, **caractérisée en ce que** les cylindres hydrauliques (26, 44) du dispositif de transfert de force pour le transfert de la force de pesanteur du tracteur à l'extrémité avant du timon de traction (3) et/ou aux éléments d'accouplement associés (17) sont sollicités en pression directement avant ou au cours du début du soulèvement des outils de traitement du sol et/ou des éléments semeurs par le biais du dispositif de levage.
